# EUROPEAN PATENT APPLICATION

(11) **EP 4 307 457 A1**
(43) Date of publication of application: **17.01.2024**
(21) Application number: 22826580.7
(22) Date of filing: 26.10.2022
(51) Int. Cl.: H01M 50/528, H01M 50/503

(54) **JUNCTION PLATE, BATTERY, BATTERY MODULE AND BATTERY PACK**

(30) Priority: 02.06.2022 CN 202221374419 U
(71) Applicant: Eve Power Co., Ltd., Jingmen, Hubei 448000 (CN); Huizhou Eve Power Co., Ltd, Tonghu Town, Zhongkai High-tech District Huizhou, Guangdong 516039 (CN)
(72) Inventor: WU, Di, Jingmen, Hubei 448000 (CN); LI, Kaibo, Jingmen, Hubei 448000 (CN); CHEN, Feng, Jingmen, Hubei 448000 (CN); HE, Wei, Jingmen, Hubei 448000 (CN); LIU, Jincheng, Jingmen, Hubei 448000 (CN)
(74) Representative: Murgitroyd & Company
(86) International application number: PCT/CN2022/127717
(87) International publication number: WO 2023/231284

(57) **Abstract**

Embodiments of the present application relate to the technical field of battery technology, for example to a current collecting plate, a battery, a battery module, and a battery pack. A current collecting plate provided in embodiments of the present application includes an electrode tab connector configured to electrically connected to a battery cell. A plurality of battery cell escaping slots are provided on an outer peripheral wall of the electrode tab connector, and the plurality of battery cell escaping slots are spaced from each other. An electrode tab protruding end is provided between adjacent two battery cell escaping slots, and an isolation space is defined between the electrode tab protruding end and the battery cell. The battery cell escaping slots spaced from each other are provided in the outer peripheral wall of the electrode tab connector, thereby reducing a contact area between the outer peripheral wall of the electrode tab connector and the battery cell to prevent the electrode tab connector from pressing and damaging the battery cell. Moreover, the isolation space is defined between the electrode tab protruding end and the battery cell, which further prevents the electrode tab connector from pressing and damaging the battery cell, and improves yield rate. The current collecting plate is applied in the battery, the battery module and the battery pack. Therefore, the electrode tab connector is prevented from pressing and damaging the battery cell during encapsulating process, which improves yield rate.

## Description

### CROSS-REFERENCE TO RELATED APPLICATIONS

This application claims priority to Chinese Patent Application No. 202221374419.X, filed on June 02, 2022, which is incorporated by reference in the present application in its entirety.

### TECHNICAL FIELD

The present application relates to the technical field of battery technology, for example to a current collecting plate, a battery, a battery module, and a battery pack.

### BACKGROUND

For users, big cylindrical batteries have fewer parts, and higher battery production efficiency and assembly efficiency. In the manufacturing processes of a cylindrical battery, it is generally necessary to attach a negative current collecting plate to a lower end face of a battery cell to realize electrical connection between the negative current collecting plate and a negative electrode tab of the battery cell. As the negative collector disk is tightly attached at a bottom of the battery cell, when encapsulating a battery, pressure is applied to encapsulating positions, which forces the negative current collecting plate to press the battery cell. It is easy to damage the battery cell, thereby reducing yield rate.

Thus, it is necessary to provide a current collecting plate, a battery, a battery module, and a battery pack to solve the above-mentioned problems.

### SUMMARY

A current collecting plate, a battery, a battery module, and a battery pack are provided in the present application to avoid damage to battery cells during encapsulating process and improve yield rate.

In a first aspect, embodiments of the present application provide a current collecting plate, including:

an electrode tab connector configured to electrically connect to a battery cell, wherein a plurality of battery cell escaping slots are provided on an outer peripheral wall of the electrode tab connector, and the plurality of battery cell escaping slots are spaced from each other, wherein an electrode tab protruding end is provided between adjacent two battery cell escaping slots, and an isolation space is defined between the electrode tab protruding end and the battery cell.

In an embodiment, the electrode tab connector is recessed towards a direction away from the battery cell to form a reinforcing protrusion.

In an embodiment, the reinforcing protrusion is arc-shaped, a plurality of reinforcing protrusions are provided, and the plurality of reinforcing protrusions are spaced from each other along a peripheral direction of the electrode tab connector.

In an embodiment, the current collecting plate further includes:
a housing connector connected to the electrode tab connector and configured to electrically connect to the housing, wherein the housing connector is provided on a side of each of the plurality of battery cell escaping slots away from the battery cell and directly faces the battery cell escaping slots.

In an embodiment, the outer peripheral wall of the electrode tab connector is stamped and bent towards a direction away from the battery cell to form the housing connector, and the battery cell escaping slots are provided on a side of the housing connector towards the battery cell.

In an embodiment, a height of the reinforcing protrusion in a direction away from the battery cell is lower than heights of the housing connector in a direction away from the battery cell.

In an embodiment, a buffer corrugation is provided on the housing connector.

In a second aspect, a battery is provided by the embodiments of the present application, including a housing and a battery disposed in the housing, wherein the battery includes the current collecting plate above described, and the current collecting plate is configured to electrically connect to the housing and the battery cell.

In an embodiment, an outer peripheral wall of the battery is provided with an annular slot, and the isolation space is defined between the electrode tab protruding end and the battery cell.

In an embodiment, the current collecting plate further includes:
an explosion-proof sheet covering on a side of the battery cell away from the current collecting plate and sealing an opening of the housing.

In a third aspect, a battery module is provided by the embodiments of the present application, including the battery above described.

In a fourth aspect, a battery pack is provided by the embodiments of the present application, including at least one battery module above described.

Beneficial effects according to the embodiments:

According to the current collecting plate provided by the embodiments, the plurality of battery cell escaping slots are provided on the outer peripheral wall of the electrode tab connector and spaced from each other, the electrode tab protruding end is provided between the adjacent two battery cell escaping slots, and the isolation space is defined between the electrode tab protruding end and the battery cell, thereby reducing a bonding area between the outer peripheral wall of the electrode tab connector and the battery cell. When encapsulating the battery, the electrode tab connector is prevented from pressing and damaging the battery cell due to the pressure at the encapsulating positions, thereby improving yield rate.

According to the battery provided by the embodiments, and the current collecting plate is applied. When encapsulating the battery, the electrode tab connector is prevented from pressing and damaging the battery cell due to the pressure at the encapsulating positions, thereby improving yield rate.

According to the battery module provided by the embodiments, and the battery is applied. When encapsulating the battery, the electrode tab connector is prevented from pressing and damaging the battery cell due to the pressure at the encapsulating positions, thereby improving yield rate.

According to the battery pack provided by the embodiments, and the current collecting plate is applied. When encapsulating the battery, the electrode tab connector is prevented from pressing and damaging the battery cell due to the pressure at the encapsulating positions, thereby improving yield rate.

### BRIEF DESCRIPTION OF THE DRAWINGS

FIG. 1 is a schematic sectional diagram of a battery provided by an embodiment of the present application.
FIG. 2 is a partially enlarged view of part A of FIG. 1.
FIG. 3 is a partially enlarged view of part B of FIG. 1.
FIG. 4 is a first schematic structural diagram of a current collecting plate provided by the embodiment of the present application.
FIG. 5 is a second schematic structural diagram of a current collecting plate provided by embodiments of the present application.

Reference numerals:
100, current collecting plate; 1, electrode tab connector; 11, battery cell escaping slot; 12, electrode tab protruding end; 121, chamfer; 13, reinforcing protrusion; 14, escaping hole; 2, housing connector; 21, buffer corrugation;
200, battery cell; 210, annular slot;
300, housing;
400, explosion-proof sheet.

### DETAILED DESCRIPTION OF THE EMBODIMENT

In the description of the present application, unless otherwise specified and limited, the terms "link", "connect" or "fix" are to be construed in a broad sense, for example, as fixedly connected, detachably connected, or integrated; mechanically connected or electrically connected; directly connected to each other or indirectly connected to each other via an intermediary; or internally connected between two elements or interacted between two elements. Meanings of the preceding terms in the present application may be understood according to situations by an ordinary person in the art.

In the present application, unless otherwise specified and limited, when a first feature is described as "on" or "below" a second feature, the first feature and the second feature may be in direct contact, or be in contact via another feature between the two features instead of being in direct contact. Moreover, when the first feature is described as "on", "above" or "over" the second feature, the first feature is right on, above or over the second feature or the first feature is obliquely on, above or over the second feature, or the first feature is simply at a higher level than the second feature. When the first feature is described as "under", "below" or "underneath" the second feature, the first feature is right under, below or underneath the second feature, or the first feature is obliquely under, below or underneath the second feature, or the first feature is simply at a lower level than the second feature.

In the description of this embodiment, the terms "upper", "lower", "left", "right" and other orientations or positional relationships are based on the orientations or positional relationships shown in the drawings, and are only for convenience of description and for simplification of operations. It does not indicate or imply that the referenced device or element must have a specific orientation, be constructed and operated in a specific orientation, and therefore cannot be understood as a limitation to the present disclosure. In addition, the terms "first" and "second" are used to distinguish in description.

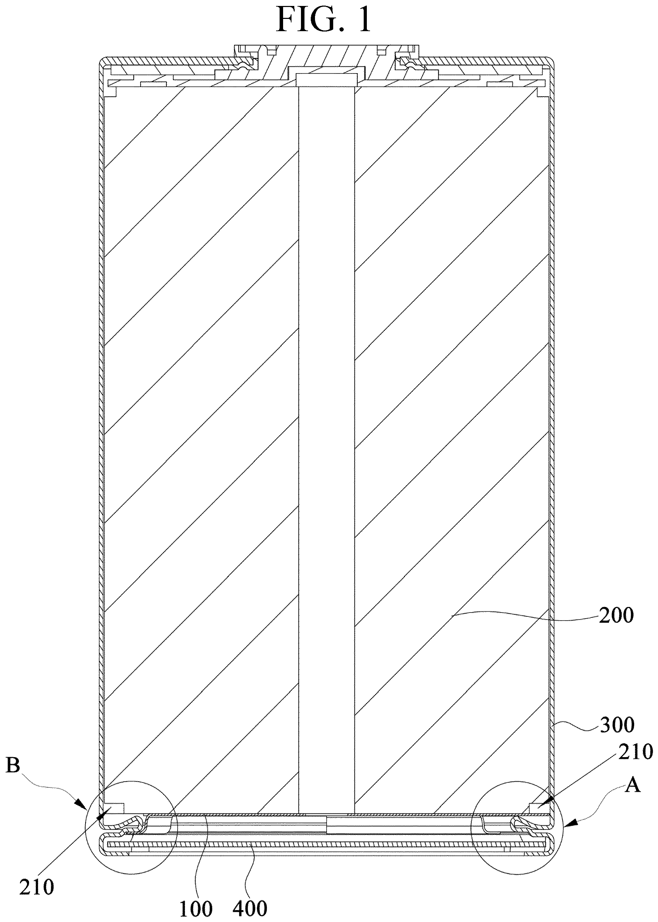

As shown in FIG. 1, a battery is provided in the embodiments. The battery may mainly refer to a big cylindrical battery. The battery includes a current collecting plate 100, a battery cell 200, and a housing 300. The current collecting plate 100 and the battery cell 200 both are disposed in the housing 300. The current collecting plate 100 may mainly refer to a negative current collecting plate. The current collecting plate 100 is attached to a lower end face of the battery cell 200 and configured to electrically connect to a negative electrode tab on the lower end face of the battery cell 200 and the housing 300.

Furthermore, as shown in FIG. 1, the battery provided by the embodiments further includes an explosion-proof sheet 400. The explosion-proof sheet 400 covers on a side of the current collecting plate 100 away from the battery cell 200 and seals an opening of the housing 300. When pressure inside the housing 300 becomes too large, the explosion-proof sheet 400 is damaged to relieve the pressure, thus avoiding danger of battery explosion.

However, during the manufacturing processes of the battery, especially in encapsulating of the battery, a pressure is applied to encapsulating positions, which may press the current collecting plate 100 and force the current collecting plate 100 to press the battery cell 200. With the fragility of the battery cell 200, it is easy for the current collecting plate 100 to press and damage the battery cell 200, thus reducing yield rate.

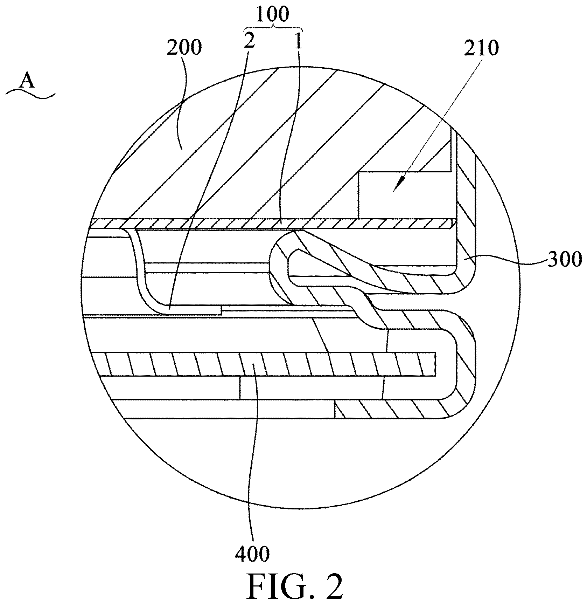

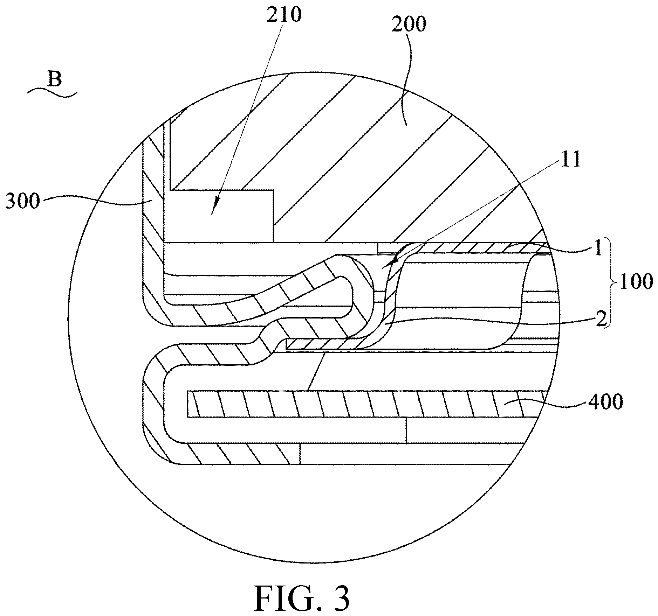

As shown in FIG. 2 to FIG. 5, the current collecting plate 100 provided by the embodiments includes an electrode tab connector 1 attached to the lower end face of the battery cell 200. The electrode tab connector 1 is configured to electrically connect to a negative electrode tab disposed on the lower end face of the battery cell 200. A plurality of battery cell escaping slots 11 are defined on an outer peripheral wall of the electrode tab connector 1, wherein the plurality of battery cell escaping slots 11 are spaced from each other. An electrode tab protruding end 12 is provided between adjacent two battery cell escaping slots 11, and an isolation space is defined between the electrode tab protruding end 12 and the battery cell 200, thereby reducing a bonding area between the outer peripheral wall of the electrode tab connector 1 and the battery cell 200. When encapsulating the battery, the electrode tab connector 1 is prevented from pressing and damaging the battery cell 200 due to the pressure at the encapsulating positions, thereby improving yield rate.

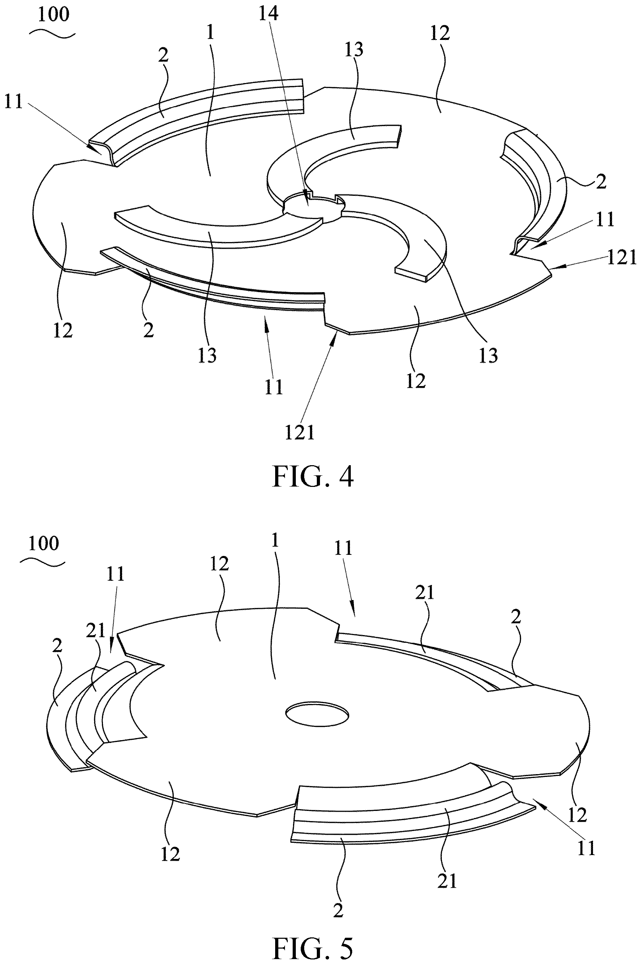

Exemplarily, as shown in FIG. 4, a chamfer 121 is provided on a corner of the electrode tab protruding end 12, and the chamfer 121 is deburred. The appearance of the electrode tab connector 1 is improved in entire, and it prevents a sharp part of the electrode tab connector 1 from injuring operators.

In the embodiments, as shown in FIG. 1 to FIG. 3, an annular slot 210 is provided on the outer peripheral wall of the battery cell 200 to define the isolation space between the electrode tab protruding end 12 and the battery cell 200, thereby preventing the electrode tab connector 1 from damaging the battery cell 200.

Exemplarily, as shown in FIG. 4, the electrode tab connector 1 is recessed towards a direction away from the battery cell 200 to form a reinforcing protrusion 13. By providing the reinforcing protrusion 13, structure strength of the current collecting plate 100 is improved, and the reinforcing protrusion 13 can be used as a welding boundary during laser welding with the current collecting plate 100.

Exemplarily, the reinforcing protrusion 13 is arc-shaped. A plurality of reinforcing protrusions 13 are provided, and the reinforcing protrusions 13 are spaced from each other along a peripheral direction of the electrode tab connector 1. In the embodiments, three reinforcing protrusions are provided. In other embodiments, the number of the reinforcing protrusions 13 may be determined based on needs. The number of the reinforcing protrusions 13 may be two, four, or more.

Exemplarily, as shown in FIG. 4, an escaping hole 14 is defined at a center of the electrode tab connector 1. The reinforcing protrusions 13 are spaced from each other along a peripheral direction of the escaping hole 14. The escaping hole 14 rightly aligns to a via through a middle of the battery cell 200 to facilitate a wielding tool to wield devices onto a top of the battery after penetrating the escaping hole 14 and the via in the battery cell 200.

Moreover, as shown in FIGs. 2 to 5, the current collecting plate 100 further includes a housing connector 2 connected to the electrode tab connector 1 and configured to electrically connect to the housing 300, wherein the housing connector 2 provided on a side of each of the battery cell escaping slots 11 away from the battery cell 200 and directly faces the battery cell escaping slots 11. It should be noted that, in the embodiments, three battery cell escaping slots 11 are provided. Correspondingly, three housing connectors 2 are provided. The housing connectors 2 and the electrode tab protruding ends 12 are staggered along the periphery direction of the electrode tab connector 1. In other embodiments, the number of the battery cell escaping slots 11 and the number of the housing connectors 2 may be determined as required.

Exemplarily, the outer peripheral wall of the electrode tab connector 1 is stamped and bent towards a direction away from the battery cell 200 to form the housing connector 2, and the battery cell escaping slots 11 is provided on a side of the housing connector 2 towards the battery cell 200. It is easy to manufacture the current collecting plate 100, the current collecting plate 100 is integrally formed, and structure strength of the current collecting plate 100 can be improved.

Exemplarily, as shown in FIG. 4, a height of the reinforcing protrusion 13 in a direction away from the battery cell 200 is lower than a height of the housing connector 2 in a direction away from the battery cell 200. It avoids abutting of the reinforcing protrusion 13 against the explosion-proof sheet 400 when sealing the housing 300 with the explosion-proof sheet 400, and avoids damages to the explosion-proof sheet 400 caused by the abutting, thereby guaranteeing explosion accuracy of the explosion-proof sheet 400.

Exemplarily, as shown in FIG. 5, a buffer corrugation 21 is provided on the housing connector 2. As such, the stability of the housing connector 2 is ensured, and the housing connector 2 has elasticity of a certain extend for buffering. After the housing connector 2 of the current collecting plate 100 is welded to the housing 300, the buffer corrugation 21 can effectively absorb pressure during the encapsulating of the battery, thereby reducing pressure to the current collecting plate 100 from the housing 300, reducing pressure to the battery cell 200 from the current collecting plate 100, and improving the safety of the battery.

According to the battery provided by the embodiments, the current collecting plate 100 is applied. When encapsulating the battery, the electrode tab connector 1 is prevented from pressing and damaging the battery cell 200 due to the pressure at the encapsulating positions, thereby improving yield rate.

A battery module is further provided by the embodiments, and the battery is applied. When encapsulating the battery, the electrode tab connector 1 is prevented from pressing and damaging the battery cell 200 due to the pressure at the encapsulating positions, thereby improving yield rate.

A battery pack is further provided by the embodiments, and the battery pack includes at least one battery module. When encapsulating the battery, the electrode tab connector 1 is prevented from pressing and damaging the battery cell 200 due to the pressure at the encapsulating positions, thereby improving yield rate.

## Claims

1. A current collecting plate, comprising:
an electrode tab connector (1) configured to electrically connected to a battery cell (200), wherein a plurality of battery cell escaping slots (11) are provided on an outer peripheral wall of the electrode tab connector (1), and the plurality of battery cell escaping slots (11) are spaced from each other, wherein an electrode tab protruding end (12) is provided between adjacent two battery cell escaping slots (11), and an isolation space is defined between the electrode tab protruding end (12) and the battery cell (200).

2. The current collecting plate of claim 1, wherein the electrode tab connector (1) is recessed towards a direction away from the battery cell (200) to form a reinforcing protrusion (13).

3. The current collecting plate of claim 2, wherein the reinforcing protrusion (13) is arc-shaped, a plurality of reinforcing protrusions (13) are provided, and the plurality of reinforcing protrusions (13) are spaced from each other along a peripheral direction of the electrode tab connector (1).

4. The current collecting plate of claim 2 or 3, further comprising:
a housing connector (2) connected to the electrode tab connector (1) and configured to electrically connected to the housing (300), wherein the housing connector (2) is provided on a side of each of the plurality of battery cell escaping slots (11) away from the battery cell (200) and directly faces the battery cell escaping slots.

5. The current collecting plate of claim 4, wherein the outer peripheral wall of the electrode tab connector (1) is stamped and bended towards a direction away from the battery cell (200) to form the housing connector (2), and the battery cell escaping slot (11) is provided on a side of the housing connector (2) towards the battery cell (200).

6. The current collecting plate of claim 4, wherein a height of the reinforcing protrusion (13) in a direction away from the battery cell (200) is lower than a height of the housing connector (2) in a direction away from the battery cell (200).

7. The current collecting plate of claim 4, wherein a buffer corrugation (21) is provided on the housing connector (2).

8. A battery, comprising a housing (300), and a battery (200) disposed in the housing (300), wherein the battery comprises the current collecting plate (300) of any one of claims 1 to 7, and the current collecting plate is configured to electrically connected to the housing (300) and the battery cell (200).

9. The battery of claim 8, wherein an outer peripheral wall of the battery (200) is provided with an annular slot (210), and the isolation space is defined between the electrode tab protruding end (12) and the battery cell (200).

10. The battery of claim 8, further comprising:
an explosion-proof sheet (400) covering on a side of the battery cell (200) away from the current collecting plate and sealing an opening of the housing (300).

11. A battery module, comprising the battery of any one of claims 8 to 10.

12. A battery pack, comprising at least one battery module of claim 11.
